# EUROPEAN PATENT APPLICATION

(11) **EP 4 692 191 A1**
(43) Date of publication of application: **11.02.2026**
(21) Application number: 24780433.9
(22) Date of filing: 27.03.2024
(51) Int. Cl.: C08J 9/18

(54) **PRODUCTION METHOD AND PRODUCTION APPARATUS FOR THERMOPLASTIC RESIN FOAM PARTICLES**

(30) Priority: 28.03.2023 JP 2023052272
(71) Applicant: Kaneka Corporation, Osaka-shi, Osaka 530-8288 (JP)
(72) Inventor: HAYASE, Yuki, Settsu-shi, Osaka 566-0072 (JP)
(74) Representative: Vossius & Partner Patentanwälte Rechtsanwälte mbB
(86) International application number: PCT/JP2024/012226
(87) International publication number: WO 2024/204327

(57) **Abstract**

In order to reduce blocking between the expanded particles and increase an expansion rate thereof, in a method for manufacturing thermoplastic resin expanded particles, in a step of using carbon dioxide as a blowing agent to obtain expanded particles (11) by heating a dispersion slurry obtained by dispersing resin particles (9) therein, pressurizing the dispersion slurry, and then releasing, from orifices (5), the dispersion slurry into a low-pressure vessel (13) under an atmosphere at a pressure lower than an internal pressure of the pressure-resistant vessel (7), a ratio, (B)/(A), of a cross-sectional area (B) of the low-pressure vessel (13) to a cross-sectional area (A) of the orifices (5) is 300 to 3030.

## Description

### Technical Field

The present invention relates to a manufacturing method and manufacturing device for thermoplastic resin expanded particles.

### Background Art

As a conventional technique, a method has been publicly known in which thermoplastic resin particles are dispersed in an aqueous dispersion medium in a pressure-resistant vessel, are heated to a temperature equal to or higher than a softening temperature of the thermoplastic resin, and are pressurized, followed by releasing the thermoplastic resin particles to an atmosphere at a pressure lower than that of the inside of the pressure-resistant vessel to expand the thermoplastic resin particles, so that expanded particles are manufactured. Further, a method for dispersing a blowing agent in the pressure-resistant vessel, depending on need has been also publicly known.

For example, Patent Literature 1 discloses a technique of, when releasing polyolefin-based resin particles to the atmosphere at a pressure lower than that of the inside of the vessel to expand the polyolefin-based resin particles, causing the expanded particles to collide with a curved collision plate from a releasing section of the pressure-resistant vessel. This achieves expanded particles exhibiting, at a low expansion rate, at least improved variation in expansion rate and exhibiting, at a high expansion rate, at least a uniform cell structure.

### Citation List

### [Patent Literature]

[Patent Literature 1]
International Publication No. WO2020/ 170694

### Summary of Invention

### Technical Problem

However, the technique disclosed in Patent Literature 1 has room for improvement in blocking between the polyolefin-based resin expanded particles and an expansion rate thereof.

It is an object of an aspect of the present invention to achieve a manufacturing method and manufacturing device for thermoplastic resin expanded particles which can reduce blocking between expanded particles and increase an expansion rate thereof.

### Solution to Problem

In order to solve the foregoing problem, a method for manufacturing thermoplastic resin expanded particles in accordance with an aspect of the present invention includes: a dispersion slurry preparation step of preparing a dispersion slurry by dispersing thermoplastic resin particles into an aqueous dispersion medium in a pressure-resistant vessel; and an expansion step of using carbon dioxide as a blowing agent to expand the thermoplastic resin particles by heating the dispersion slurry to a temperature equal to or higher than a softening temperature of the thermoplastic resin particles, pressurizing the dispersion slurry, and then releasing, from a releasing port, the dispersion slurry into a tubular low-pressure vessel under an atmosphere at a pressure lower than an internal pressure of the pressure-resistant vessel, a ratio, (B)/(A), of a cross-sectional area (B) of the tubular low-pressure vessel to a cross-sectional area (A) of the releasing port being 300 to 3030.

Further, in order to solve the foregoing problem, a device for manufacturing thermoplastic resin expanded particles in accordance with an aspect of the present invention includes: a pressure-resistant vessel configured to accommodate a dispersion slurry obtained by dispersing thermoplastic resin particles in an aqueous dispersion medium, to impregnate the thermoplastic resin particles with carbon dioxide as a blowing agent; a tubular low-pressure vessel which has a pressure lower than an internal pressure of the pressure-resistant vessel; and a releasing port through which a mixture in the pressure-resistant vessel is to be released into the tubular low-pressure vessel, a ratio, (B)/(A), of a cross-sectional area (B) of the tubular low-pressure vessel to a cross-sectional area (A) of the releasing port being 300 to 3030.

### Advantageous Effects of Invention

According to an aspect of the present invention, it is possible to achieve a manufacturing method for thermoplastic resin expanded particles which can reduce blocking between expanded particles and increase an expansion rate thereof.

### Brief Description of Drawings

Fig. 1 is a view schematically illustrating an outline configuration of one example of an expansion device for thermoplastic resin expanded particles which is used in a manufacturing method in accordance with an embodiment of the present invention.
Fig. 2 is a front view illustrating a configuration of a throttle plate used in a manufacturing method in accordance with an embodiment of the present invention.
Fig. 3 is a cross-sectional view illustrating a configuration of a throttle plate used in a manufacturing method in accordance with an embodiment of the present invention.
Fig. 4 is a cross-sectional view illustrating a configuration of a low-pressure vessel used in a manufacturing method in accordance with an embodiment of the present invention.
Fig. 5 is a view for schematically explaining a collision step in a manufacturing method in accordance with an embodiment of the present invention.

### Description of Embodiments

The following description will discuss an embodiment of the present invention, but the present invention is not limited to the embodiment. The present invention is not limited to the arrangements described below, but may be altered in various ways by a skilled person within the scope of the claims. Any embodiment or example derived from a proper combination of technical means disclosed in different embodiments or examples is also encompassed in the technical scope of the present invention. Furthermore, a new technical feature can be formed by combining technical means disclosed in differing embodiments. All academic and patent documents cited in the present specification are incorporated herein by reference. Any numerical range expressed as "A to B" in the present specification means "not less than A and not more than B (i.e., a range from A to B which includes both A and B)" unless otherwise stated.

### 1. Manufacturing method for thermoplastic resin expanded particles in accordance with the present embodiment

As a result of diligent study on the foregoing object, the present inventor has uniquely found knowledge that in releasing a content in a pressure-resistant vessel from a releasing port into a tubular low-pressure vessel, setting a ratio, (B)/(A), of a cross-sectional area (B) of the cylindrical low-pressure vessel to a cross-sectional area (A) of the releasing port to a specific numerical range makes it possible to reduce blocking between expanded particles and increase an expansion rate of the expanded particles. The present inventor has made the present embodiment on the basis of this knowledge.

That is, the method for manufacturing thermoplastic resin expanded particles in accordance with the present embodiment (hereinafter, referred to simply as "present method") includes: a dispersion slurry preparation step of preparing a dispersion slurry by dispersing thermoplastic resin particles into an aqueous dispersion medium in a pressure-resistant vessel; and an expansion step of using carbon dioxide as a blowing agent to expand the thermoplastic resin particles by heating the dispersion slurry to a temperature equal to or higher than a softening temperature of the thermoplastic resin particles, pressurizing the dispersion slurry, and then releasing, from a releasing port, the dispersion slurry into a tubular low-pressure vessel under an atmosphere at a pressure lower than an internal pressure of the pressure-resistant vessel. Further, in the present method, a ratio, (B)/(A), of a cross-sectional area (B) of the low-pressure vessel and a cross-sectional area (A) of the releasing port is 300 to 3030.

### 2. Materials of thermoplastic resin expanded particles

### 2-1. Thermoplastic resin

Examples of the thermoplastic resin serving as a base resin for thermoplastic resin expanded particles include a polyolefin-based resin, a polyester-based resin, a polystyrene-based resin, a polyphenylene ether-based resin, a polyamide-based resin, and a mixture thereof. The thermoplastic resin is preferably a polyolefin-based resin. The following description will discuss the present method using a polyolefin-based resin as a base resin for the thermoplastic resin expanded particles.

The polyolefin-based resin refers to a resin containing an olefin unit in an amount of not less than 50% by weight, preferably not less than 80% by weight, more preferably not less than 90% by weight. Specific examples of polyolefin-based resin include polyethylenes such as high-density polyethylenes, medium-density polyethylenes, low-density polyethylenes, linear low-density polyethylenes, and low-molecular-weight polyethylenes; propylene homopolymers; polypropylenes such as α-olefin-propylene random copolymers such as ethylene-propylene random copolymers, ethylene-propylene-1-butene random copolymers, and propylene-1-butene random copolymers, and α-olefin-propylene block copolymers; and other polyolefin homopolymers such as polybutene. Each of these may be used solely. Alternatively, two or more of these may be used in combination.

Among these, ethylene-propylene random copolymers, ethylene-propylene-1-butene random copolymers, and propylene-1-butene random copolymers are suitable for use, since they exhibit good expandability when formed into expanded particles.

The base resin for the polyolefin-based resin expanded particles may be mixed with, as well as the polyolefin-based resin, another thermoplastic resin, e.g., polystyrene, polybutene, ionomer, or the like, provided that the characteristics of the polyolefin-based resin are not lost.

Typically, the polyolefin-based resin is preferably melted with use of, for example, an extruder, a kneader, a Banbury mixer, or a roll and is processed into resin particles each having, for example, a columnar shape, an elliptical shape, a spherical shape, a cubic shape, and a rectangular parallelepiped shape in advance, in order to facilitate manufacture of expanded particles. The resin particle is also referred to as "pellet".

A weight of one particle of the polyolefin-based resin particles is preferably 0.1 mg to 30 mg, more preferably 0.3 mg to 10 mg.

### 2-2. Additive to be added to polyolefin-based resin

In a case where an additive is added to the polyolefin-based resin, it is preferable that an additive be mixed with the polyolefin-based resin with use of, for example, a blender before the polyolefin-based resin particles are manufactured. Specific examples of an additive include cell nucleating agents (also referred to simply as "nucleating agents"). In a case where a hydrocarbon-based blowing agent, such as propane, butane, pentane, or hexane is used, an inorganic nucleating agent, such as talc, silica, calcium carbonate, kaolin, titanium oxide, bentonite, or barium sulfate is typically used as the nucleating agent. Although an amount of the cell nucleating agent added, which depends on the type of the polyolefin-based resin used and the type of the cell nucleating agent used, is not specifically determined, the amount is preferably approximately not less than 0.001 parts by weight and not more than 2 parts by weight with respect to 100 parts by weight of the polyolefin-based resin.

In the present method using carbon dioxide as a blowing agent, it is preferable to use the inorganic nucleating agent and/or a hydrophilic substance. In a case where water is used as a dispersion medium for an aqueous dispersion material, water is impregnated into the polyolefin-based resin, and the water impregnated acts as a blowing agent together with another blowing agent or solely.

The hydrophilic substance has action of increasing an amount of water impregnated in the polyolefin-based resin. Specific examples of the hydrophilic substance include inorganic substances such as sodium chloride, calcium chloride, magnesium chloride, borax, and zinc borate; and organic substances. Examples of the organic substances include: glycerin, melamine, isocyanuric acid, melamine-isocyanuric acid condensate; polyethers such as polyethylene glycol and polyethylene oxide, adducts obtained by addition of a polyether to polypropylene or the like, and polymer alloys of these substances; and polymers such as alkali metal salts of ethylene-(meth)acrylic acid copolymers, alkali metal salts of butadiene-(meth)acrylic acid copolymers, alkali metal salts of carboxylated nitrile rubbers, alkali metal salts of isobutylene-maleic anhydride copolymers, and alkali metal salts of poly(meth)acrylic acids. Each of these hydrophilic substances may be used solely. Alternatively, two or more of these hydrophilic substances may be used in combination.

An amount of the hydrophilic substance added is preferably not less than 0.005 parts by weight and not more than 2 parts by weight with respect to 100 parts by weight of the polyolefin-based resin, more preferably not less than 0.005 parts by weight and not more than 1 parts by weight with respect to 100 parts by weight of the polyolefin-based resin. Adjusting the type and an amount of the hydrophilic substance enables adjustment of an average cell diameter of the polyolefin-based resin expanded particles.

When polyolefin-based resin particles are manufactured, some additive such as a colorant, an antistatic agent, an antioxidant, a phosphorus-based processing stabilizer, a lactone-based processing stabilizer, a metal deactivator, a benzotriazole-based ultraviolet absorber, a benzoate-based photo stabilizer, a hindered amine-based photo stabilizer, a flame retarder, a flame retardant aid, an acid neutralizer, a crystal nucleating agent, or an amide-based additive can be added depending on need, provided that the characteristics of the polyolefin-based resin are not impaired.

### 2-3. Blowing agent

In the present method, the blowing agent used in the expansion step is carbon dioxide. As the blowing agent, the present method only needs to use carbon dioxide, and a method using carbon dioxide and a conventionally known blowing agent together is also encompassed in the scope of the present method. As the conventionally known blowing agent, a volatile hydrocarbon-based blowing agent such as propane, isobutane, butane, pentane, and hexane, and an inorganic gas, such as air, nitrogen, and water can be used.

### 1-4. Dispersing agent and dispersion auxiliary agent

As the aqueous dispersion medium, water is preferably used. A dispersion medium in which methanol, ethanol, ethylene glycol, glycerin, or the like is added to water can also be used as an aqueous dispersing agent.

In the aqueous dispersion medium, a dispersing agent is preferably used in order to prevent the polyolefin-based resin particles from being fused together. Specific examples of the dispersing agent include inorganic dispersing agents such as tertiary calcium phosphate, tertiary magnesium phosphate, titanium oxide, basic magnesium carbonate, calcium carbonate, barium sulfate, kaolin, talc, and clay. Among these, tertiary calcium phosphate, barium sulfate, and kaolin are more preferable, since they each can stably disperse, even when used in a small amount, an aqueous dispersion material containing polyolefin-based resin particles in the pressure-resistant vessel.

Further, it is preferable to use a dispersion auxiliary agent together with the dispersing agent. Specific examples of the dispersion auxiliary agent include anionic surfactants of carboxylate type such as N-acylamino acid salt, alkyl ether carboxylates, and acyl peptide; anionic surfactants of sulfonate type such as alkylsulfonates, alkyl benzene sulfonates, alkyl naphthalene sulfonates, and sulfosuccinate; anionic surfactants of sulfate ester type such as sulfonated oil, alkyl sulfates, alkyl ether sulfates, and alkyl amide sulfates; anionic surfactants of phosphate ester type such as alkyl phosphates, polyoxyethylene phosphate, and alkyl allyl ether sulfates; and the like. Examples of the dispersion auxiliary agent further include polyanionic polymer surfactants such as maleic acid copolymer salt; polymer surfactants of polycarboxylic acid type such as polyacrylate; polystyrene sulfonate and naphthalene sulfonic acid formalin condensate salt; and the like.

As the dispersion auxiliary agent, an anionic surfactant of sulfonate type is preferably used, and it is further preferable to use one selected from alkylsulfonates and alkyl benzene sulfonates or a mixture of two or more selected from alkylsulfonates and alkyl benzene sulfonates. Furthermore, an alkylsulfonate is more preferably used, and an alkylsulfonate that contains a C10-C18 linear carbon chain as a hydrophobic group is particularly preferably used, since such an alkylsulfonate makes it possible to reduce the amount of the dispersing agent adhering to polyolefin-based resin expanded particles.

In an embodiment of the present invention, it is particularly preferable that at least one selected from tertiary calcium phosphate, tertiary magnesium phosphate, barium sulfate, and kaolin is used as a dispersing agent and n-paraffin sodium sulfonate is used as a dispersion auxiliary agent in combination with the dispersing agent.

### 3. Steps of the present method

### 3-1. Dispersion slurry preparation step

In the dispersion slurry preparation step, for example, the above-described polyolefin-based resin particles are dispersed in the above-described aqueous dispersion medium in a pressure-resistant vessel to prepare a dispersion slurry.

Amounts of the dispersing agent and dispersion auxiliary agent used depend on the types thereof and the type of the polyolefin-based resin used. Typically, the dispersing agent is added preferably in an amount of not less than 0.1 parts by weight and not more than 5 parts by weight with respect to 100 parts by weight of the aqueous dispersion medium, more preferably in an amount of not less than 0.2 parts by weight and not more than 3 parts by weight with respect to 100 parts by weight of the aqueous dispersion medium. The dispersion auxiliary agent is added preferably in an amount of not less than 0.001 parts by weight and not more than 0.3 parts by weight with respect to 100 parts by weight of the aqueous dispersion medium, more preferably in an amount of not less than 0.001 parts by weight and not more than 0.1 parts by weight with respect to 100 parts by weight of the aqueous dispersion medium. Typically, the polyolefin-based resin particles are preferably used in an amount of not less than 20 parts by weight and not more than 100 parts by weight with respect to 100 parts by weight of the aqueous dispersion medium in order to enhance the dispersibility in the aqueous dispersion medium. The above configuration makes it possible to stably disperse the polyolefin-based resin particles into the aqueous dispersion medium in the pressure-resistant vessel.

### 3-2. Expansion step

In the expansion step, carbon dioxide is used as a blowing agent to expand the thermoplastic resin particles by heating the dispersion slurry to a temperature equal to or higher than a softening temperature of the thermoplastic resin particles, pressurizing the dispersion slurry, and then releasing, from a releasing port, the dispersion slurry into a tubular low-pressure vessel under an atmosphere at a pressure lower than an internal pressure of the pressure-resistant vessel. More specifically, in the expansion step, the dispersion slurry is heated to a temperature equal to or higher than the softening temperature of the polyolefin-based resin particles to impregnate carbon dioxide serving as a blowing agent into the polyolefin-based resin particles. Afterwards, an inorganic gas is introduced into the pressure-resistant vessel, and the pressure inside the pressure-resistant vessel is set to 0.6 MPa to 5.0 MPa. With this pressure maintained, the dispersion slurry is released to an atmosphere at a pressure lower than an internal pressure of the pressure-resistant vessel, to expand the polyolefin-based resin particles.

A temperature for heating the dispersion slurry is not particularly limited, provided that the temperature is equal to or higher than the softening temperature of the polyolefin-based resin particles, but the temperature is preferably equal to or higher than the melting point of the polyolefin-based resin particles, more preferably equal to or higher than a temperature 5°C above the melting point. A temperature for heating the dispersion slurry is preferably equal to or lower than a temperature 20°C above the melting point, more preferably equal to or lower than a temperature 15°C above the melting point. For example, in the case of an ethylene-propylene copolymer having a melting point of 145°C, the heating temperature is preferably 145°C to 165°C, further preferably 150°C to 160°C. In a case where the heating temperature is lower than 145°C, the polyolefin-based resin particles are less likely expanded. There is a tendency that in a case where the heating temperature exceeds 165°C, the mechanical strength and heat resistance of resulting expanded particles are insufficient, and polyolefin-based resin particles are likely fused in the pressure-resistant vessel.

The melting point of the polyolefin-based resin is a temperature at the vertex of a melting peak obtained when, with use of a differential scanning calorimeter (DSC), the polyolefin-based resin is heated from 40°C to 220°C at a rate of 10°C/min, and then is cooled to 40°C at a rate of 10°C/min, followed by being heated to 220°C at a rate of 10°C/min again.

The inorganic gas is not particularly limited. Examples of the inorganic gas include an inorganic gas containing carbon dioxide, nitrogen, air, or a combination thereof as a main component (typically, in an amount of not less than 50% by volume, preferably not less than 70% by volume) and containing, for example, an inert gas, such as argon, helium, and xenon, steam, oxygen, hydrogen, or ozone in a small amount (not more than 50% by volume, preferably not more than 30% by volume). The inorganic gas is preferably carbon dioxide or nitrogen from the viewpoint of, for example, economical efficiency, productivity, and environmental adaptability, and is more preferably carbon dioxide or air from the viewpoint of safety and economical efficiency.

A holding pressure by the inorganic gas is not particularly limited, but it is preferably 0.6 MPa to 5.0 MPa as described above, more preferably, 1.0 MPa to 3.5 MPa, in order to improve the expansion rate and reduce variation in the expansion rate. In a case where the holding pressure is less than 0.6 MPa, the effect exerted by introducing the blowing agent is reduced, and there is a tendency that the expanded particles are not sufficiently expanded and it is difficult to obtain expanded particles having a desired expansion rate. Further, in a case where the holding pressure exceeds 5.0 MPa, the cells of resulting expanded particles become fine, resulting in a tendency that a closed cell ratio is reduced, thus impairing shrinkage, shape stability, mechanical strength, and heat resistance of a molded article. The timing of introducing the inorganic gas has no significant effect on the quality, such as the expanding ratio of the expanded particles and variation in the expanding ratio of the expanded particles, and thus the inorganic gas may be introduced either before, during, or after heating in the pressure-resistant vessel.

A time period until the polyolefin-based resin particles are released together with the aqueous dispersion medium to a low-pressure atmosphere after the pressurization has been carried out with use of the inorganic gas and a predetermined pressure has been reached is not particularly limited, but is preferably within 60 minutes or as short as possible, in order to improve productivity. The pressure inside the vessel during the releasing is preferably maintained at the above pressure reached.

Further, a low-pressure atmosphere to which the dispersion slurry is released only needs to be an atmosphere at a pressure lower than an internal pressure of the pressure-resistant vessel, but typically, an atmosphere at a pressure close to the atmospheric pressure is selected. The atmosphere means a space including a scattering route taken by the released aqueous dispersion material (expanded particles and aqueous dispersion medium), but typically refers to a device interior having a pipe or duct shape and separated from outside air.

In the method for manufacturing polyolefin-based resin expanded particles, the dispersion slurry (the polyolefin-based resin particles and the aqueous dispersion medium) is preferably released, while maintaining an internal pressure of the pressure-resistant vessel, from the pressure-resistant vessel through the releasing port into a tubular low-pressure vessel under an atmosphere at a pressure lower than an internal pressure of the pressure-resistant vessel.

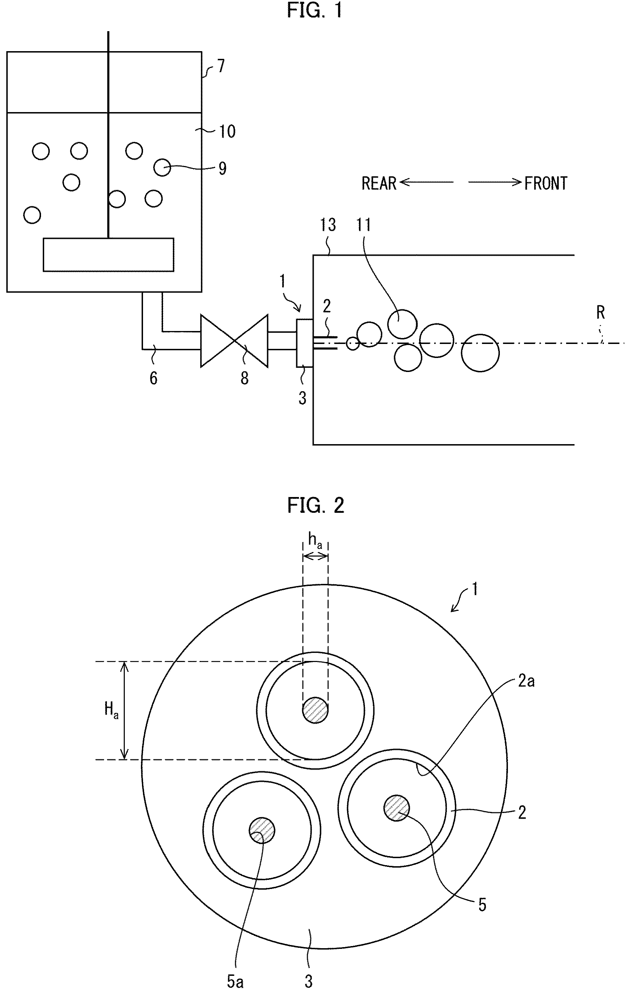

With reference to Fig. 1, the following will describe the expansion step of the present method. Fig. 1 is a view schematically illustrating an outline configuration of one example of an expansion device (manufacturing device) for thermoplastic resin expanded particles which is used in the present method.

As illustrated in Fig. 1, the expansion device used in the present method includes a throttle plate 1 (releasing section) equipped with tubes, a releasing piping 6, a pressure-resistant vessel 7, a valve 8, and a tubular low-pressure vessel 13.

The releasing piping 6 is a piping connecting the pressure-resistant vessel 7 and the low-pressure vessel 13. The valve 8 is provided to this releasing piping 6. The valve 8 is a valve for switching the pressure-resistant vessel 7 between opened and closed states. The throttle plate 1 is disposed at an outlet of the releasing piping 6. The releasing piping 6 and the low-pressure vessel 13 communicate with each other via the throttle plate 1. Here, in the present specification, in a direction along an axis R of the tubular low-pressure vessel 13, a direction away from the throttle plate 1 is regarded as the front, and a direction closer to the throttle plate 1 is regarded as the rear.

The pressure-resistant vessel 7 accommodates therein a dispersion slurry obtained by dispersing resin particles 9 made of polyolefin resin in an aqueous dispersion medium 10. In the expansion step, the dispersion slurry that has been heated and pressurized inside the pressure-resistant vessel 7 is caused to pass through the releasing piping 6 by opening the valve 8 and is released into the low-pressure vessel 13 through the throttle plate 1, to form expanded particles 11.

Here, the throttle plate 1 and the low-pressure vessel 13 used in the present method will be further described in detail.

### <Throttle plate 1>

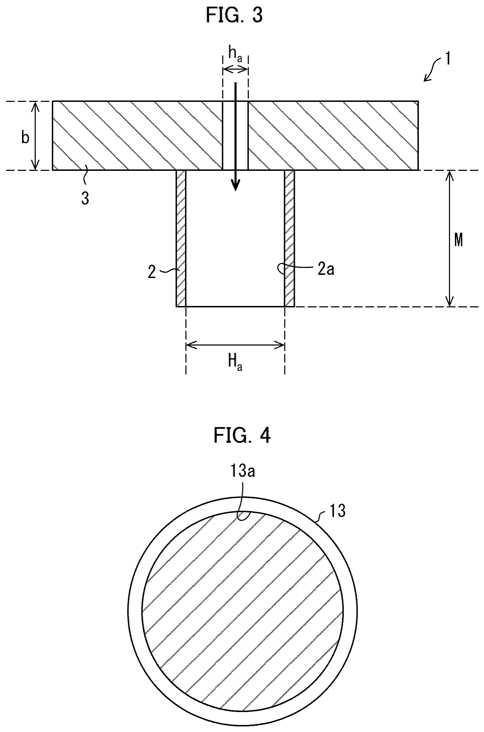

The throttle plate 1 is typically used to adjust the releasing time and make the expansion rate uniform. Fig. 2 is a front view illustrating a configuration of the throttle plate 1 used in the present method. Fig. 3 is a cross-sectional view illustrating a configuration of the throttle plate 1.

As illustrated in Fig. 2 and Fig. 3, the throttle plate 1 includes tubular members 2 and an orifice plate 3. The tubular members 2, which have circular tube shapes, are provided on the surface of the orifice plate 3 on a releasing side of a dispersion slurry, that is, a front side. The orifice plate 3 has a configuration in which the orifices 5 through which the dispersion slurry passes are formed, as the releasing port, and is of an orifice type. The tubular members 2 are disposed so that the inner surfaces 2a thereof surround the respective orifices 5. More specifically, the centers of the orifices 5 are positioned so as to substantially coincide with the centers of the respective tubular members 2.

As such, the throttle plate 1 is a throttle plate equipped with tubes in which the tubular members 2 are provided to the orifice plate 3. The tubular members 2 make it possible to reduce a scattering angle of the dispersion slurry released from the orifices 5. As a result, the expanded particles can be expanded so as to have a uniform size, and variation in expanding ratio can be reduced.

Note that the orifice plate 3 is not limited to the above-described orifice type, and only needs to have a configuration through which the dispersion slurry passes. As the orifice plate 3, for example, an orifice type, a nozzle type, or a Venturi type can be employed, and it is also possible to employ a combination thereof. That is, the releasing port is not limited to the orifices 5, but only needs to be capable of releasing the dispersion slurry to the low-pressure vessel 13. The releasing port may be of the nozzle type or the Venturi type. The orifices 5 are preferably employed as the releasing port. The fact that the orifices 5 are employed as the releasing port as described above makes it possible to maintain a constant outflow rate with a simple structure and obtain expanded particles having a high expanding ratio and exhibiting low variation in expanding ratio.

In the configuration illustrated in Fig. 2, the three orifices 5 are provided to the orifice plate 3. However, the number of the orifices 5 is not limited to three, but can be set as appropriate. The number of the orifices 5 may be one. In a case where two or more orifices 5 are provided to the orifice plate 3, the plurality of orifices 5 may all have the same shape, or may all have different shapes from each other. Further, some may have the same shape and the others may have different shapes.

The diameter hₐ of the orifices 5 is not particularly limited. For example, in a case where only one orifice 5 is formed, the diameter hₐ of the orifice 5 is preferably not less than 6.0 mm, more preferably not less than 7.0 mm, still more preferably not less than 8.0. In a case where only one orifice 5 is formed, the diameter hₐ of the orifice 5 is, for example, 7.2mm. In a case where a plurality of orifices 5 are formed, the diameter hₐ of each of the orifices 5 is preferably not less than 2.0 mm, more preferably not less than 3.0 mm, still more preferably not less than 4.0 mm. In a case where a plurality of orifices 5 are formed, the diameter hₐ of each of the orifices 5 is, for example, 3.6mm. The upper limit of the diameter hₐ is not particularly limited. However, the larger the diameter hₐ is, more the capacity for transporting the expanded particles is needed, resulting in increase in the cost of facilities.

The thickness of the orifice plate 3 is preferably 0.2 mm to 10 mm, more preferably 0.5 mm to 5 mm. In a case where the thickness is less than 0.2 mm, there is a risk that a pressure in the releasing causes the orifice plate 3 to break. On the other hand, when the thickness exceeds 10 mm, an expansion rate of resulting expanded particles is reduced, resulting in a risk that it becomes difficult to obtain expanded particles having a desired expansion rate and the resin obstructs the openings.

The tubular members 2 are integrally mounted to the orifice plate 3 on a releasing side of the dispersion slurry in the orifices 5. The material of the tubular members 2 is not particularly limited, but metal is typically employed. A method for integrating the tubular members 2 and the orifice plate 3 is not particularly limited, and may use, for example, welding, fitting, screwing, or adhesion. The orifice plate 3 and the tubular members 2 may be manufactured as a single entity, depending on need.

The opening area of end parts of the tubular members 2 on an opposite side from the orifice plate 3 can be set as appropriate in accordance with the size and length of the tubular members 2, but typically is not less than 1.3 times the opening area of the orifices 5 (which may hereinafter be referred to as "cross-sectional area of the orifices 5"). In a case where the opening area of the tubular members 2 is less than 1.3 times the opening area of the orifices 5, agglutination and clogging of the expanded particles released likely occur. Note that shorter lengths of the tubular members 2 will not cause the above problems, but make it difficult to exert the effect of the tubular members 2.

The shapes of the tubular members 2 are not limited to the circular tube illustrated in Fig. 2, and may be circular holes each including part of a circle or ellipse. The circular hole here refers to a through hole having an inner side wall thereof forming a circular shape, an elliptical shape, or a shape obtained by, for example, adding, to facing two sides of a rectangular shape or a square shape, half circles having diameters corresponding to the two sides.

The tubular members 2 are not limited to the circular hole. The tubular members 2 may each have a slit shape. The tubular members 2 having a slit shape here refers to a through hole having a polygonal shape, such as a rectangle, a square, a rhombus, a trapezoid, a parallelogram, other quadrangles, a triangle, a pentagon, and a hexagon.

In a case where the shape of each of the tubular members 2 is the circular tube illustrated in Fig. 2, the inner diameter Hₐ at an outlet for releasing the dispersion slurry is, for example, not less than 0.6 mm, preferably 1.2 mm to 25 mm, and the length M of the tubular member 2 in a releasing direction is, for example, not less than 5 mm, preferably 5 mm to 300 mm. In a case where the length M of the tubular member 2 is less than 5 mm, the scattering route taken by the dispersion slurry released does not differ from a case where a throttle plate 1 without the tubular members 2 is used. Accordingly, the effect of reducing variation in expanding ratio is weakened. In a case where the length M is greater than 300 mm, there is a risk that the expanded particles collide with each other inside the tubular members 2 and are fused, resulting in failure to obtain expanded particles. The length M is determined as a distance from the part of the tubular members 2 that is located closest to the orifice plate 3 to the part thereof that is located farthest from the orifice plate 3, in the releasing direction of the dispersion slurry.

Further, the shape of each of the tubular members 2 may be a shape of part of a pyramid or cone shape. In this case, the cross-sectional area of parts of such tubular members 2 which come into contact with the orifice plate 3 is close to the opening area of the orifices 5. The cross-sectional area of the tubular members 2 at the outlet through which the dispersion slurry is released is larger. That is, the shape of each of the tubular members 2 is a shape such that an area of regions surrounded by the side walls of the tubular members 2 is increased in a releasing direction of the dispersion slurry.

The throttle plate 1 may be provided with a number of tubular members 2 which is equal to or less than the number of the orifices 5 of the orifice plate 3. Setting the number of the orifices 5 of the throttle plate 1 to two or more is advantageous, since increasing the production rate.

In the configuration illustrated in Fig. 2, the throttle plate 1 is provided with the three tubular members 2. However, the number of the tubular members 2 in the throttle plate 1 is not limited to three, but can be set as appropriate. The number of the tubular members 2 may be one. In a case where two or more tubular members 2 are provided to the throttle plate 1, the plurality of tubular members 2 may all have the same shape or may all have different shapes from each other. Further, some may have the same shape and the others may have different shapes.

### <Low-pressure vessel 13>

The space inside the low-pressure vessel 13 is a space with a low pressure and under a saturated steam atmosphere. Therefore, the expanded particles 11 released from the throttle plate 1 come into contact with the saturated steam. As the low-pressure vessel 13, a conventionally known vessel can be employed, provided that it has a tubular shape and can achieve the above-described low-pressure atmosphere and saturated steam atmosphere. The cross-sectional shape of the low-pressure vessel 13 is not particularly limited. Examples of the cross-sectional shape include a circular shape, an elliptical shape, a quadrangular shape, a pentagonal shape, and a hexagonal shape. From the viewpoint of ease of attachment to manufacturing facilities, the low-pressure vessel 13 is preferably in the form of a piping. The low-pressure vessel 13 may have a configuration in which steam is supplied from a steam inlet.

### <Relationship between cross-sectional area (A) of tubular members 2 and cross-sectional area (B) of low-pressure vessel 13>

The present inventors focused on the cross-sectional area (A) of the orifices 5 as a releasing port and the cross-sectional area (B) of the low-pressure vessel 13, for dealing with an object of reducing the blocking between the expanded particles and increasing the expansion rate of the expanded particles. Typically, the cross-sectional area (A) of the orifices 5 as a releasing port is considered to determine an amount by which a mixture in the pressure-resistant vessel 7 is released, but it has been unclear whether or not the cross-sectional area (A) and the cross-sectional area (B) of the low-pressure vessel 13 have a correlation, regarding the blocking between the expanded particles and the expansion rate thereof. When the cross-sectional area (B) of the low-pressure vessel 13 is reduced, the low-pressure vessel 13 becomes an elongated tubular shape, and tends to exhibit a high internal temperature close to 100°C. Therefore, in a case where the cross-sectional area (B) of the low-pressure vessel 13 is reduced, the expanded particles released from the tubular members 2 likely adhere together, making it likely that blocking occurs. On the other hand, in a case where the cross-sectional area (B) of the low-pressure vessel 13 is increased, blocking less likely occurs, but there is a tendency that an expansion rate of the expanded particles is reduced. To address this, as a result of diligent study by the present inventors, the present inventors uniquely found knowledge that a ratio of the cross-sectional area (A) of the orifices 5 to the cross-sectional area (B) of the low-pressure vessel 13 affects the blocking between the expanded particles, and the expansion rate of the expanded particles.

In the present method, a ratio, (B)/(A), of the cross-sectional area (B) of the low-pressure vessel 13 to the cross-sectional area (A) of the orifices 5 is 300 to 3030, preferably, 400 to 3000. The (B)/(A) falling within the above numerical range advantageously makes it possible to reduce the blocking between the expanded particles and to increase the expansion rate of the expanded particles (that is, to prevent decrease in the expansion rate).

The following will describe the determination of the cross-sectional area (A) of the orifices 5 and the determination of the cross-sectional area (B) of the low-pressure vessel 13 with reference to Fig. 2 and Fig. 4, respectively. Fig. 4 is a cross-sectional view illustrating a configuration of the low-pressure vessel 13. Fig. 4 is a cross-sectional view perpendicular to the axis R.

First, the cross-sectional area (A) of the orifices 5 is an area of obliquely hatched regions illustrated in Fig. 2. That is, the cross-sectional area (A) is determined as an area of regions surrounded by the inner wall surfaces 5a of the orifices 5, in the cross section perpendicular to an axial direction of the orifice plate 3. The cross-sectional area (A) can be said to determine a discharge quantity of the dispersion slurry discharged from the orifices 5. In a case where as illustrated in Fig. 2, the plurality of orifices 5 are provided, the cross-sectional area (A) is a total of areas of the regions surrounded by the inner wall surfaces 5a of the respective orifices 5. In a case where the number of the orifices 5 is one, of course, the cross-sectional area (A) is an area of a region surrounded by the inner wall surface 5a of the one orifice 5. Note that the cross-sectional area (A) can be said to be an opening area of the orifices 5.

Next, the cross-sectional area (B) of the low-pressure vessel 13 is an area of an obliquely hatched region illustrated in Fig. 4. That is, the cross-sectional area (B) is determined as an area of a region surrounded by an inner surface 13a, in the cross section perpendicular to the axial direction of the low-pressure vessel 13. The cross-sectional area (B) can be said to determine an area of a region where expanded particles can move, in the cross section perpendicular to the axial direction of the low-pressure vessel 13.

The cross-sectional area (A) and the cross-sectional area (B) can be set as appropriate, provided that the (B)/(A) falls within the above numerical range. In order to stabilize the quality of the expanded particles, the cross-sectional area (A) is preferably 30 mm² to 60 mm², more preferably 40 mm² to 55 mm². The cross-sectional area (A) exceeding 60 mm² leads to an increased facility capacity needed for maintaining a constant pressure in the pressure-resistant vessel 7, resulting in higher costs. The cross-sectional area (A) being less than 40 mm² leads to reduced productivity. The cross-sectional area (B) is preferably 9000 mm² to 125000 mm², more preferably 15000 mm² to 100000 mm². Setting the cross-sectional area (B) to the numerical range advantageously makes it possible to downsize the facilities.

The axial length of the low-pressure vessel 13 is not particularly limited, but is preferably 500 mm to 3000 mm, more preferably 500 mm to 2000 mm. Setting the axial length of the low-pressure vessel 13 to the numerical range advantageously makes it possible to reliably exert the effect by collision and to downsize the facilities.

### 3-3. Collision step

In the present method, the expansion step preferably includes a collision step. In the collision step, when the mixture in the pressure-resistant vessel is released from a releasing port (e.g., the orifices 5), the mixture is caused to collide with the inner surface 13a of the low-pressure vessel 13. The "mixture" here refers to a mixture of polyolefin-based resin particles impregnated with carbon dioxide as a blowing agent and the dispersion slurry.

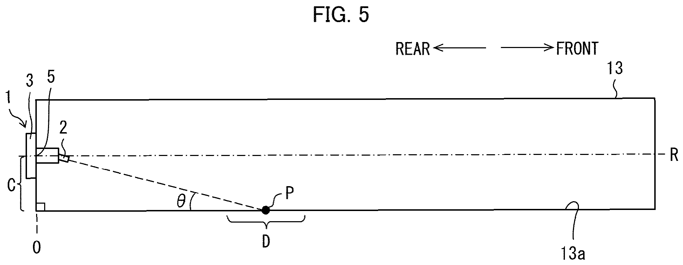

Fig. 5 is a view for schematically explaining the collision step in the present method. In the present method, as illustrated in Fig. 4, the expanded particles released from the throttle plate 1 are caused to collide with the inner surface 13a, so that the scattering direction of the expanded particles 11 is changed. Typically, in the expansion, when the temperature becomes equal to or lower than the softening temperature of the resin particles, the resin is cured, and the expansion terminates. However, in a case where, like the present method, the mixture in the pressure-resistant vessel is caused to collide with the inner surface 13a, the individual expanded particles are uniformly expanded, resulting in reduction in variation in expansion rate, presumably since the temperature and humidity of the expansion atmosphere become more uniform. Therefore, according to the present method, it is possible to reduce variation in expansion rate of the expanded particles by carrying out the above collision step.

An angle θ at which the mixture collides with the inner surface 13a of the low-pressure vessel 13 can be set as appropriate, provided that the above-described effect of reducing variation in the expansion rate is exerted. The collision angle θ is preferably 13° to 20°, more preferably 14° to 16°. In a case where the collision angle θ falls within the above numerical range, the effect of the collision becomes stronger, and the effect of reducing variation in the expansion rate is likely to be large.

Note that in a case where as illustrated in Fig. 5, the mixture is caused to collide with the inner surface 13a of the low-pressure vessel 13, the axes of the tubular members 2 of the throttle plate 1 do not coincide with the axis R of the low-pressure vessel 13, and are tilted at a predetermined angle. In a case where as described above, the axes of the tubular members 2 are tilted, most of the mixture released from the orifices 5 collides at a predetermined collision angle θ with respect to the inner surface 13a of the low-pressure vessel 13.

Here, the low-pressure vessel 13 is not limited to the configuration in which the cross-sectional area (B) is constant in a front-and-rear direction (direction along the axis R). The low-pressure vessel 13 may have a configuration in which the cross-sectional area (B) differs in the front-and-rear direction. In this case, the cross-sectional area (B) is determined as the average of the cross-sectional area thereof in a collision region D with the mixture in the inner surface 13a. That is, the average (cross-sectional area (B)) of the cross-sectional area at least in the collision region D is, when the (B)/(A) falls within the numerical range, encompassed in the present embodiment. In a case where the axial length of the low-pressure vessel 13 is 1000 mm and the collision angle θ is 15°, the collision region D is, on the inner surface 13a, a region of 400 mm to 600 mm from an end part thereof on a rear side (throttle plate 1 side).

The collision region D depends on the collision angle θ. For example, in a case where the cross-sectional area (B) differs in the front-and-rear direction, but the inner surface 13a can be regarded as being substantially parallel to the axis R, the collision region D can be calculated as follows. First, as illustrated in Fig. 5, the position of the orifices 5 in the front-and-rear direction is set as the origin O. The distance between the origin O and the orifices 5 is set as C. The intersection point between a straight line tilted at the collision angle θ with respect to the inner surface 13a and passing a base end part 2b, and the inner surface 13a is set as P. In this case, the collision region D is determined as a region within ±350 mm from the intersection point P. Further, when the trigonometric ratio is applied, the collision region D can be said to be a region of (C/tanθ)±350mm from the origin O in the inner surface 13a.

### 4. Thermoplastic resin expanded particles manufactured by the present method

An expansion rate of the expanded particles manufactured by the present method can be set as appropriate, provided that the above-described effects are exerted, but is preferably 10 times to 25 times, more preferably 15 times to 25 times. According to the present method, even in a case where expanded particles having a high expansion rate, such as the numerical range described above, are manufactured, blocking between the expanded particles is reduced while preventing decrease in expansion rate (maintaining a high expansion rate).

A closed cell ratio of the expanded particles manufactured by the present method is preferably 80% to 100%, more preferably 90% to 100%. In a case where the closed cell ratio is less than 80%, a second-step expandability is insufficient, resulting in poor fusion in molding, and, for example, the mechanical strength of a resulting molded product is reduced.

An average cell diameter of the expanded particles manufactured by the present method is preferably 20 µm to 500 pm, more preferably 100 µm to 400 µm. The average cell diameter being less than 20 µm raises problems of, for example, distorting a shape of a resulting molded product. The average cell diameter exceeding 500 µm decreases a mechanical strength of a resulting molded product.

The expanded particles have a closed cell ratio of not less than 80%. Therefore, depending on need, it is also possible that after the expanded particles are, while being heated and pressurized in the pressure-resistant vessel, treated for a certain time period to be impregnated with air, the expanded particles are filled into a molding mold and are heated by steam to be subjected to heating in-mold expansion molding, so that a molded product matching the mold is manufactured.

A blocking occurrence rate of the expanded particles manufactured by the present method is low, and is preferably not more than 1%, particularly preferably 0%.

The in-mold expanded product obtained as described above has excellent plasticity, excellent shock-absorbing properties, and a small rate of dimensional shrinkage, and exhibits a small shape deformation, thus having extremely high commercial values.

### 5. Manufacturing method for molded product of thermoplastic resin expanded particles manufactured by the present method

The manufacturing method for a molded product of thermoplastic resin expanded particles in accordance with the present embodiment is a method for molding the thermoplastic resin expanded particles obtained by the above-described method. As the method for molding the thermoplastic resin expanded particles, for manufacturing the molded product of the thermoplastic resin expanded particles, a known method can be employed.

### 6. Manufacturing device for molded product of thermoplastic resin expanded particles

The manufacturing device for thermoplastic resin expanded particles in accordance with the present embodiment is a device capable of carrying out the manufacturing method for thermoplastic resin expanded particles in accordance with the present embodiment. Examples of such a manufacturing device include the one illustrated in Figs. 1 to 5. With reference to Figs. 1 to 5, the following description will discuss the manufacturing device for thermoplastic resin expanded particles in accordance with the present embodiment.

The manufacturing device for thermoplastic resin expanded particles in accordance with the present embodiment (which may hereinafter referred to as "present device") includes a throttle plate 1 (releasing section) equipped with tubes, a releasing piping 6, a pressure-resistant vessel 7, a valve 8, and a tubular low-pressure vessel 13. The pressure-resistant vessel 7 is configured to accommodate a dispersion slurry obtained by dispersing resin particles 9 made of polyolefin resin in an aqueous dispersion medium 10, to impregnate the resin particles 9 with carbon dioxide as a blowing agent. The low-pressure vessel 13 has a lower pressure than the internal pressure of the pressure-resistant vessel 7. The throttle plate 1 has orifices 5 (releasing port) (see Fig. 2). The orifices 5 are openings for releasing, to the low-pressure vessel 13, a mixture containing resin particles 9 impregnated with carbon dioxide in the pressure-resistant vessel 7. In the present device, as described above, a ratio, (B)/(A), of the cross-sectional area (B) of the low-pressure vessel 13 to the cross-sectional area (A) of the orifices 5 is 300 to 3030.

Thus, according to the present device, setting a ratio, (B)/(A), of the cross-sectional area (B) of the low-pressure vessel 13 to the cross-sectional area (A) of the orifices 5 to a specific numerical range makes it possible to reduce blocking between the expanded particles 11 and increase an expansion rate of the expanded particles 11.

The throttle plate 1 is configured to cause the mixture in the pressure-resistant vessel 7 to be released from the orifices 5 and collide with an inner surface 13a of the low-pressure vessel 13. The throttle plate 1 includes tubular members 2 and an orifice plate 3. The tubular members 2, which have circular tube shapes, are provided on the surface of the orifice plate 3 on a releasing side of a dispersion slurry, that is, a front side. The orifice plate 3 has a configuration in which the orifices 5 through which the dispersion slurry passes are formed. The tubular members 2 are disposed so that the inner surfaces 2a thereof surround the respective orifices 5.

The axes of the tubular members 2 of the throttle plate 1 do not coincide with the axis R of the low-pressure vessel 13, and are tilted at a predetermined angle. Most of the mixture released from the orifices 5 thus collides at the predetermined collision angle θ with respect to the inner surface 13a of the low-pressure vessel 13. Causing, as described above, the resin particles 9 impregnated with carbon dioxide to collide with the inner surface 13a makes it possible to reduce variation in the expansion rate of the expanded particles 11.

The determination of the other items such as the cross-sectional area (A), the cross-sectional area (B), and the collision angle θ in the present device is as described in the above "3. Steps of the present method", and thus the descriptions thereof are omitted.

Aspects of the present invention can also be expressed as follows:
As described above, each embodiment of the present invention is as follows.
<1> A method for manufacturing thermoplastic resin expanded particles, the method including: a dispersion slurry preparation step of preparing a dispersion slurry by dispersing thermoplastic resin particles into an aqueous dispersion medium in a pressure-resistant vessel; and an expansion step of using carbon dioxide as a blowing agent to expand the thermoplastic resin particles by heating the dispersion slurry to a temperature equal to or higher than a softening temperature of the thermoplastic resin particles, pressurizing the dispersion slurry, and then releasing, from a releasing port, the dispersion slurry into a tubular low-pressure vessel under an atmosphere at a pressure lower than an internal pressure of the pressure-resistant vessel, a ratio, (B)/(A), of a cross-sectional area (B) of the tubular low-pressure vessel to a cross-sectional area (A) of the releasing port being 300 to 3030.
<2> The method of <1>, wherein the expansion step includes a collision step of, when a mixture in the pressure-resistant vessel is released from the releasing port, causing the mixture to collide with an inner surface of the tubular low-pressure vessel.
<3> The method of <2>, wherein an angle at which the mixture collides with the inner surface of the tubular low-pressure vessel is 13° to 20°.
<4> The method according of any one of <1> to <3>, wherein the releasing port is an orifice.
<5> The method of any one of <1> to <4>, wherein the cross-sectional area (A) is 30 mm² to 60 mm².
<6> The method of any one of <1> to <5>, wherein the cross-sectional area (B) is 9000 mm² to 125000 mm².
<7> The method of any one of <1> to <6>, wherein an expansion rate of the thermoplastic resin expanded particles manufactured is 10 times to 25 times.
<8> The method of any one of <1> to <7>, wherein the thermoplastic resin particles are polyolefin-based resin particles.
<9> A method for manufacturing a molded product of thermoplastic resin expanded particles, the method including molding thermoplastic resin expanded particles manufactured by the method of any one of <1> to <7>.
<10> A device for manufacturing thermoplastic resin expanded particles, the device including: a pressure-resistant vessel configured to accommodate a dispersion slurry obtained by dispersing thermoplastic resin particles in an aqueous dispersion medium, to impregnate the thermoplastic resin particles with carbon dioxide as a blowing agent; a tubular low-pressure vessel which has a pressure lower than an internal pressure of the pressure-resistant vessel; and a releasing port through which a mixture in the pressure-resistant vessel is to be released into the tubular low-pressure vessel, a ratio, (B)/(A), of a cross-sectional area (B) of the tubular low-pressure vessel to a cross-sectional area (A) of the releasing port being 300 to 3030.
<11> The device of <10>, further including a releasing section including the releasing port, the releasing section being configured to cause the mixture in the pressure-resistant vessel to be released from the releasing port and collide with an inner surface of the tubular low-pressure vessel.
<12> The device of <11>, wherein an angle at which the mixture collides with the inner surface of the tubular low-pressure vessel is 13° to 20°.
<13> The device of any one of <10> to <12>, wherein the releasing port is an orifice.
<14> The device of any one of <10> to <13>, wherein the cross-sectional area (A) is 30 mm² to 60 mm².
<15> The device of any one of <10> to <14>, wherein the cross-sectional area (B) is 9000 mm² to 125000 mm².
<16> The method of any one of <1> to <8>, wherein the tubular low-pressure vessel has an axial length of 500 mm to 3000 mm.
<17> The device of any one of <10> to <15>, wherein the tubular low-pressure vessel has an axial length of 500 mm to 3000 mm.
<18> A thermoplastic resin expanded particle manufactured by the method of any one of <1> to <8> and <16> and exhibiting a blocking occurrence rate of 0%.
<19> A thermoplastic resin expanded particle exhibiting a blocking occurrence rate of 0%.

### Examples

### <Expansion rate>

A weight Gi of resulting expanded particles was accurately weighed up to 0.001 g (rounded off in the fourth place after the decimal point). Then, the polyolefin-based resin expanded particles, which had been weighed and whose weight was known, were submerged in a graduated cylinder in which 100 ml of ethanol at 23°C was accommodated. From a scale at the surface that was elevated at that time, the volume yi (cm³) of the polyolefin-based resin expanded particles was read. Then, the weight Gi (g) of the polyolefin-based resin expanded particles was divided by the volume yi (cm³) of the polyolefin-based resin expanded particles. By converting this quotient into the unit of g/L, the apparent density di of the polyolefin-based resin expanded particles on respective sieves was determined. Finally, the expansion rate Ki = ds/di was obtained from a ratio of the density ds (= 900 g/L) of a base material resin.

### <Blocking occurrence rate>

The expanded particles thus obtained were processed with use of a vibration sieve machine, and coarse particles containing expanded particle blocked were sorted. A weight of the sorted coarse particles containing the expanded particles blocked was measured, and a ratio thereof to the total weight of the expanded particles was calculated. The value thus obtained was regarded as a blocking occurrence rate.

### (Example 1)

### (Manufacture of polyolefin-based resin particles)

With respect to 100 parts by weight of an ethylene-propylene random copolymer (density of 0.90 g/cm³, a melting point of 148°C, MI = 7.5 g/10 min), which was a polyolefin-based resin, 7.5 parts by weight of a carbon black masterbatch, 0.05 parts by weight of talc as a cell nucleating agent, and 0.1 parts by weight of glycerin were measured. These were fed to a 26 mmφ biaxial extruder (manufactured by Toshiba Machine Co., Ltd., TEM26-SX) and were melt-kneaded at a resin temperature of 200°C. Thereafter, the mixture was extruded from a cylindrical die having a diameter of 1.2 mmφ and was cut with use of a cutter after cooling with water, so that columnar polyolefin-based resin particles (pellets) (1.2 mg/particle) containing polyolefin-based resin were obtained.

### (Manufacture of polyolefin-based resin expanded particles)

Into a pressure-resistant vessel, 100 parts by weight of polyolefin-based resin particle thus obtained, 0.3 parts by weight of kaolin (ASP-170 manufactured by BASF) as a dispersing agent, 0.05 parts by weight of sodium dodecylbenzene sulfonate (NEOPELEX G-15 manufactured by Kao Corporation) as a dispersion auxiliary agent, and 200 parts by weight of water were added. Thereafter, 3.6 parts by weight of carbon dioxide was added as a blowing agent, the aqueous dispersion slurry was heated to 151°C while being stirred in the pressure-resistant vessel. The pressure inside the pressure-resistant vessel at this time was approximately 2.2 MPa. Thereafter, additional carbon dioxide was impregnated thereinto, and the pressure inside the pressure-resistant vessel was increased to an expansion pressure of 2.6 MPa. The aqueous dispersion slurry in the pressure-resistant vessel was kept at a predetermined expansion temperature of 151°C at an expansion pressure of 2.6 MPa for 20 minutes and then was released to the low-pressure vessel 13 (expansion tube) illustrated in Fig. 5 via the throttle plate 1 illustrated in Fig. 5, so that expanded particles were obtained. At this time, the collision angle θ was 15°. Further, the cross-sectional area (A) of the tubular members 2 of the throttle plate 1 was 40 mm², and the cross-sectional area (B) of the low-pressure vessel 13 was 50000 mm².

### (Example 2)

Expanded particles were obtained as in Example 1 except that the cross-sectional area (B) of the low-pressure vessel 13 was 120000 mm².

### (Example 3)

Expanded particles were obtained as in Example 1 except that the cross-sectional area (A) of the tubular members 2 of the throttle plate 1 was 55 mm², and the cross-sectional area (B) of the low-pressure vessel 13 was 120000 mm².

### (Example 4)

Expanded particles were obtained as in Example 1 except that the cross-sectional area (A) of the tubular members 2 of the throttle plate 1 was 55 mm², and the cross-sectional area (B) of the low-pressure vessel 13 was 64242 mm².

### (Example 5)

Expanded particles were obtained as in Example 1 except that the cross-sectional area (B) of the low-pressure vessel 13 was 17671 mm².

### (Comparative Example 1)

Expanded particles were obtained as in Example 1 except that the cross-sectional area (A) of the tubular members 2 of the throttle plate 1 was 41 mm², and the cross-sectional area (B) of the low-pressure vessel 13 was 7854 mm².

### (Comparative Example 2)

Expanded particles were obtained as in Example 1 except that the cross-sectional area (A) of the tubular members 2 of the throttle plate 1 was 41 mm², and the cross-sectional area (B) of the low-pressure vessel 13 was 125664 mm².

### (Results)

Measurement results for expansion rates and blocking occurrence rates of the expanded particles that were obtained in Examples 1 to 5 and Comparative Examples 1 and 2 are shown in Table 1.

**[Table 1]**

| | | Example 1 | Example 2 | Example 3 | Example 4 |
|---|---|---|---|---|---|
| Cross-sectional area (A) | mm² | 40 | 40 | 55 | 55 |
| Cross-sectional area (B) | mm² | 50000 | 120000 | 120000 | 64242 |
| Cross-sectional area (B)/ cross-sectional area (A) | - | 1250 | 3000 | 2182 | 1168 |
| Expansion rate | time | 14 | 14 | 14 | 14 |
| Blocking occurrence rate | % | 0 | 0 | 0 | 0 |

| | | Example 5 | Comparative Example 1 | Comparative Example 2 |
|---|---|---|---|---|
| Cross-sectional area (A) | mm² | 40 | 41 | 41 |
| Cross-sectional area (B) | mm² | 17671 | 7854 | 125664 |
| Cross-sectional area (B)/ cross-sectional area (A) | - | 442 | 192 | 3065 |
| Expansion rate | time | 14 | 14 | 12 |
| Blocking occurrence rate | % | 0 | 1 | 0 |

As shown in Table 1, in Examples 1 to 5, expansion rates of expanded particles obtained were 14 times, and blocking occurrence rates were 0%. In Comparative Example 1, an expansion rate of expanded particles obtained was 14 times, and a blocking occurrence rate was 1%. In Comparative Example 2, an expansion rate of expanded particles obtained was 12 times, and a blocking occurrence rate was 0%.

The results of Table 1 show that in Examples 1 to 5 where (B)/(A) fell within a range of 300 to 3030, the expansion rates were maintained at 14 times, and blocking between the expanded particles was small. In contrast, in Comparative Example 1 where (B)/(A) was less than 300, an expansion rate was maintained at 14 times, but blocking between expanded particles was observed. In Comparative Example 1 where (B)/(A) exceeded 3030, the blocking between the expanded particles was small, but the expansion rate was not maintained at 14 times.

### Industrial Applicability

The present invention can be suitably used for expanded particles used in the manufacture of, for example, shock-absorbing packing materials, logistics materials, heat insulating materials, civil engineering and construction materials, and automotive components.

### Reference Signs List

- 1: Throttle plate
- 2: Tubular member
- 2a: Inner surface
- 3: Orifice plate
- 5: Orifice (releasing port)
- 6: Releasing piping
- 7: Pressure-resistant vessel
- 8: Valve
- 9: Resin particle
- 10: Aqueous dispersion medium
- 11: Expanded particle
- 13: Low-pressure vessel
- 13a: Inner surface

## Claims

1. A method for manufacturing thermoplastic resin expanded particles, the method comprising:
a dispersion slurry preparation step of preparing a dispersion slurry by dispersing thermoplastic resin particles into an aqueous dispersion medium in a pressure-resistant vessel; and
an expansion step of using carbon dioxide as a blowing agent to expand the thermoplastic resin particles by heating the dispersion slurry to a temperature equal to or higher than a softening temperature of the thermoplastic resin particles, pressurizing the dispersion slurry, and then releasing, from a releasing port, the dispersion slurry into a tubular low-pressure vessel under an atmosphere at a pressure lower than an internal pressure of the pressure-resistant vessel,
a ratio, (B)/(A), of a cross-sectional area (B) of the tubular low-pressure vessel to a cross-sectional area (A) of the releasing port being 300 to 3030.

2. The method according to claim 1, wherein the expansion step includes a collision step of, when a mixture in the pressure-resistant vessel is released from the releasing port, causing the mixture to collide with an inner surface of the tubular low-pressure vessel.

3. The method according to claim 2, wherein an angle at which the mixture collides with the inner surface of the tubular low-pressure vessel is 13° to 20°.

4. The method according to any one of claims 1 to 3, wherein the releasing port is an orifice.

5. The method according to any one of claims 1 to 3, wherein the cross-sectional area (A) is 30 mm² to 60 mm².

6. The method according to any one of claims 1 to 3, wherein the cross-sectional area (B) is 9000 mm² to 125000 mm².

7. The method according to any one of claims 1 to 3, wherein an expansion rate of the thermoplastic resin expanded particles manufactured is 10 times to 25 times.

8. The method according to any one of claims 1 to 3, wherein the thermoplastic resin particles are polyolefin-based resin particles.

9. A method for manufacturing a molded product of thermoplastic resin expanded particles, the method comprising molding thermoplastic resin expanded particles manufactured by the method according to any one of claims 1 to 3.

10. A device for manufacturing thermoplastic resin expanded particles, the device comprising:
a pressure-resistant vessel configured to accommodate a dispersion slurry obtained by dispersing thermoplastic resin particles in an aqueous dispersion medium, to impregnate the thermoplastic resin particles with carbon dioxide as a blowing agent;
a tubular low-pressure vessel which has a pressure lower than an internal pressure of the pressure-resistant vessel; and
a releasing port through which a mixture in the pressure-resistant vessel is to be released into the tubular low-pressure vessel,
a ratio, (B)/(A), of a cross-sectional area (B) of the tubular low-pressure vessel to a cross-sectional area (A) of the releasing port being 300 to 3030.

11. The device according to claim 10, further comprising a releasing section including the releasing port,
the releasing section being configured to cause the mixture in the pressure-resistant vessel to be released from the releasing port and collide with an inner surface of the tubular low-pressure vessel.

12. The device according to claim 11, wherein an angle at which the mixture collides with the inner surface of the tubular low-pressure vessel is 13° to 20°.

13. The device according to any one of claims 10 to 12, wherein the releasing port is an orifice.

14. The device according to any one of claims 10 to 12, wherein the cross-sectional area (A) is 30 mm² to 60 mm².

15. The device according to any one of claims 10 to 12, wherein the cross-sectional area (B) is 9000 mm² to 125000 mm².
